# EUROPÄISCHE PATENTANMELDUNG

(11) **EP 1 167 840 A1**
(43) Veröffentlichungstag der Anmeldung: **02.01.2002**
(21) Anmeldenummer: 00113301.6
(22) Anmeldetag: 21.06.2000
(51) Int. Cl.: F16J 15/32, F01D 5/20

(54) **Bürstendichtung für Turbomaschinenschaufeln**

(71) Anmelder: SIEMENS AKTIENGESELLSCHAFT, 80333 München (DE)
(72) Erfinder: Anding, Dirk, 45468 Mülheim a.d.Ruhr (DE); Bolms, Hans-Thomas, 45468 Mülheim a.d.Ruhr (DE); Scheurlen, Michael, 45470 Mülheim a.d.Ruhr (DE); Strassberger, Michael, 44879 Bochum (DE); Tiemann, Peter, 58452 Witten (DE)

(57) **Zusammenfassung**

Die Erfindung betrifft eine Gasturbinenlaufschaufel (3), auf deren Schaufelspitze (11) Borsten (47) so angeordnet sind, dass diese bei einem Einbau der Gasturbinenlaufschaufel (3) in eine Gasturbine (21) an einem gegenüberliegenden Führungsring (31) schleifen und dabei einen Spalt zwischen der Gasturbinenlaufschaufel (3) und dem Führungsring (31) abdichten. Die Erfindung betrifft auch eine Gasturbine (21) mit solchen Gasturbinenlaufschaufeln (3).

## Beschreibung

Die Erfindung betrifft eine Gasturbinenlaufschaufel mit entlang einer Schaufelachse aufeinander folgend einem Schaufelfuss, einem Schaufelblatt und einer Schaufelspitze. Die Erfindung betrifft auch eine Gasturbine mit einer solchen Gasturbinenlaufschaufel, die einem Führungsring gegenüberliegend in einem Schaufelkranz der Gasturbine angeordnet ist.

Eine Gasturbinenlaufschaufel ist in der US-PS 4,936,745 offenbart. Die Gasturbinenlaufschaufel ist in einem Schaufelkranz auf einer Rotorscheibe montiert. Sie ist in einem Strömungskanal angeordnet, der einerseits durch die Rotorscheiben und andererseits durch ein Gasturbinengehäuse begrenzt ist. Auf der gehäuseseitigen Begrenzung des Strömungskanals sind jedem Schaufelkranz von Gasturbinenlaufschaufeln gegenüberliegend Führungsringe angeordnet. Jede Gasturbinenlaufschaufel erstreckt sich von einem Schaufelfuß in der Rotorscheibe über ein Schaufelblatt bis hin zu einer Schaufelspitze. Auf die der Gasturbinenlaufschaufel zugewandten Fläche ihres Führungsrings ist ein Dichtmaterial aufgebracht, an dem die Schaufelspitzen der Gasturbinenlaufschaufeln schleifen. Das Dichtmaterial wird durch die schleifenden Schaufelspitzen abrasiv abgetragen. Hierdurch wird ein Spalt zwischen den Führungsringen und den Gasturbinenlaufschaufelkränzen möglichst gering gehalten. Ein solcher Spalt führt zu einem Vorbeiströmen des als Arbeitsmedium fungierenden heißen Gases im Strömungskanal. Durch das Vorbeiströmen wird durch das Arbeitsmedium keine Arbeit verrichtet, was zu einer Wirkungsgradeinbuße für die Gasturbine führt. Es ist also wünschenswert, den Spalt zwischen den Schaufelspitzen der Gasturbinenlaufschaufeln und den Führungsringen möglichst klein zu halten. Aufgrund von fertigungstechnischen Toleranzen und temperaturausdehnungs-bedingten Längenänderungen muss aber ein Sicherheitsabstand zwischen den Schaufelspitzen und den Führungsringen eingehalten werden, da ein Anstreifen der Gasturbinenlaufschaufeln mit ihren Schaufelspitzen an den Führungsringen zu einer Beschädigung der Gasturbinenlaufschaufeln und der Führungsringe führen kann. Durch das abrasive Dichtmaterial wird eine solche Beschädigung vermieden, da die Schaufelspitzen sich unter geringen Kräften in das Dichtmaterial eingraben.

Eine ebenfalls abrasiv wirkende Spaltdichtung ist auch aus der US-PS 4,289,446 bekannt.

Nachteiligerweise führt die abrasive Spaltdichtung zu einem Eintrag von Dichtmaterial in den Strömungskanal, was zu einer Beschädigung von dem Strömungskanal nachfolgenden Schaufelreihen führen kann.

Aufgabe der Erfindung ist es dementsprechend, eine Gasturbinenlaufschaufel bereitzustellen, die eine effektive Abdichtung eines Spaltes ermöglicht, der sich zwischen der in einer Gasturbine eingebauten Laufschaufel und einem gegenüberliegenden, den Strömungskanal der Gasturbine begrenzenden Führungsring ergibt, wobei gleichzeitig ein beschädigendes Anstreifen der Gasturbinenlaufschaufel an diesem Führungsring vermieden wird, ohne dass hierzu ein Dichtmaterial abrasiv abgetragen werden müßte. Weitere Aufgabe der Erfindung ist die Angabe einer Gasturbine mit einer wirksamen Spaltabdichtung zwischen den Gasturbinenlaufschaufeln einer Gasturbine und den den Gasturbinenlaufschaufeln gegenüberliegenden Führungsringen.

Erfindungsgemäß wird die auf eine Gasturbinenlaufschaufel gerichtete Aufgabe gelöst durch eine Gasturbinenlaufschaufel mit entlang einer Schaufelachse aufeinander folgend einem Schaufelfuß, einem Schaufelblatt, einer Schaufelspitze mit einer quer zur Schaufelachse verlaufenden Spitzenkante, wobei auf der Schaufelspitze entlang der Spitzenkante Borsten angeordnet sind.

Mit der Erfindung wird somit der Weg eingeschlagen, durch eine mit den Borsten gebildete Bürstendichtung den Spalt zwischen der in einer Gasturbine eingebauten Gasturbinenlaufschaufel und einem ihr gegenüberliegenden Fürhrungsring abzudichten. Die Borsten erstrecken sich dabei von der Schaufelspitze bis zu dem Führungsring, an dem sie auch anstreifen können. Somit genügt eine höhere Fertigungstoleranz bei der Auslegung der Gasturbine, um eine Beschädigung der Gasturbinenlaufschaufeln durch ein Anstreifen an den Führungsringen zu vermeiden. Weiterhin ist durch eine Elastizität der Borsten gewährleistet, dass auch bei temperaturbedingten Längenänderungen und Verschiebungen der Spalt wirksam abgedichtet ist, da sich die durch die Borsten gebildete Bürstendichtung über ihre Elastizität veränderten Spaltbreiten anpaßt. In herkömmlichen Varianten von Abdichtungen wurde entweder ein abrasives Dichtmaterial, wie oben beschrieben, gewählt, oder die Schaufelspitze jeder Gasturbinenlaufschaufel z.B. mit einer Anstreifkante versehen. Eine solche dünne Anstreifkante führt zu weniger gravierenden Beschädigungen beim Anstreifen der Schaufelspitze am Führungsring.

Eine weitere Möglichkeit üblicher Art ist, die Schaufelspitze mit einem kammartigen Labyrinthdichtungssystem zu versehen. Hierdurch wird der Strömungswiderstand für durch den Spalt strömendes Arbeitsmedium vergrößert und somit eine gewisse Dichtwirkung erzielt. Keiner der Fälle führt aber zu einer befriedigenden Abdichtung des Spaltes, so dass die immernoch erheblichen Spaltströmungen zu signifikanten Wirkungsgradverlusten führten. Mittels der erstmalig eingeführten Abdichtung des Spaltes über Borsten wird nunmehr sowohl dem Beschädigungsrisiko Rechnung getragen, da ein Anstreifen der Borsten an dem gegenüberliegenden Führungsring zu keinerlei Beschädigungen führt. Andererseits ergibt sich eine effektive Spaltabdichtung auch unter variablen Betriebs- und damit Temperaturbedingungen, da sich die elastischen Borsten, wie oben ausgeführt, veränderlichen Spaltbreiten anpassen.

Vorzugsweise sind die Borsten auf einem Träger angeordnet, der in einer an der Schaufelspitze vorgesehene Verhakung eingeschoben ist. Durch diese Ausbildung können einerseits die Borsten zunächst in einfacher Weise zu einem Verbund zusammengefaßt werden und anschließend mit der separat gefertigten übrigen Gasturbinenlaufschaufel verbunden werden. Andererseits ist durch diese separate Ausführung von Borsten mit Borstenträger einerseits und übriger Gasturbinenlaufschaufel andererseits auch ein einfaches Austauschen eventuell abgenutzter Borsten möglich. Weiter bevorzugt ist der Träger durch ein Anschweißen an die Schaufelspitze gesichert.

Bevorzugtermaßen ist die Verhakung so ausgelegt, dass sie den größten Teil der durch ein Anstreifen der Borsten an einem Führungsring bei einer Rotation der Gasturbinenlaufschaufel in einer Gasturbine entstehenden Kräfte aufnimmt. So ist bereits durch die Verhakung der Schaufelspitze eine ausreichende mechanische Stabilität für das Dichtungssystem gewährleistet. Es muss nunmehr nur noch eine Sicherung gegen ein Herausfallen der Borsten getroffen werden, etwa durch ein punktuelles Anschweißen.

Bei einer Rotation der Gasturbinenlaufschaufel in einer Gasturbine ergibt sich eine Bewegungsrichtung für die Gasturbinenlaufschaufel, die eine Umlaufrichtung definiert. Vorzugsweise sind die Borsten entgegen der Umlaufrichtung geneigt. Hierdurch wird ein Verkanten der Borsten am Führungsring vermieden. Bevorzugtermaßen bestehen die Borsten aus Draht.

Bevorzugt ist die Gasturbinenlaufschaufel für eine stationäre Gasturbine, insbesondere mit einer Leistung größer als 10 MW, ausgelegt. Gerade bei stationären Gasturbinen und insbesondere bei solchen mit großer Leistung, die in einem Kraftwerk zur Energieerzeugung eingesetzt werden, kommt es maßgeblich auf einen hohen Wirkungsgrad an. Hier machen sich also Wirkungsgradeinbußen durch eine zu hohe Spaltströmung besonders nachteilig bemerkbar.

Erfindungsgemäß wird die auf eine Gasturbine gerichtete Aufgabe gelöst durch eine Gasturbine mit einer Gasturbinenlaufschaufel entsprechend einer der oben beschriebenen Ausführungen.

Die Vorteile einer solchen Gasturbine ergeben sich entsprechend den obigen Ausführungen zu den Vorteilen der Gasturbinenlaufschaufel.

Vorzugsweise ist die Gasturbinenlaufschaufel der Gasturbine in einem Schaufelkranz angeordnet, wobei dem Schaufelkranz radial auswärts ein Führungsring gegenüberliegt, der mit einer Korrosionsschutzschicht versehen ist, an welchem Führungsring die Borsten anliegen. Zum Schutz des Führungsrings vor dem heißen, aggressiven Arbeitsmedium wird häufig eine Schutzbeschichtung vorgesehen. Diese Schutzbeschichtung ist besonders anfällig gegenüber einem Anstreifen der Gasturbinenlaufschaufel und wird hierdurch leicht beschädigt. Durch die Spaltabdichtung mittels der auf der Schaufelspitze aufsitzenden Borsten kommt es nicht mehr zu einer solchen Beschädigung, da die Borsten ohne eine ernsthaft schädliche Wirkung über die Schutzschicht gleiten.

Die Erfindung wird in Ausführungsbeispielen näher erläutert.

### Es zeigen:

- FIG 1: eine Gasturbinenlaufschaufel,
- FIG 2: schematisch eine Gasturbine,
- FIG 3: eine Schaufelspitze einer Gasturbinenlaufschaufel,
- FIG 4: einen Längsschnitt durch die Schaufelspitze der Figur 3,
- FIG 5, 6: die Herstellung eines Borstenträgers mit Borsten.

Gleiche Bezugszeichen haben in den verschiedenen Figuren die gleiche Bedeutung.

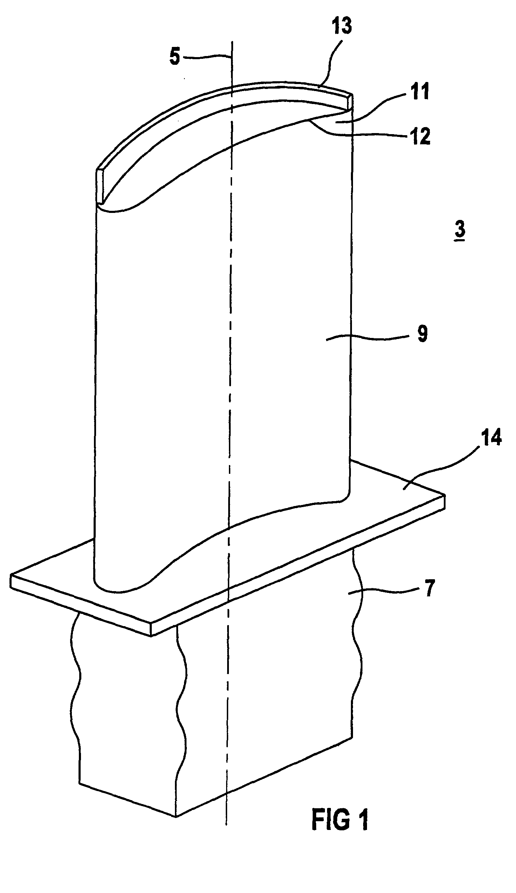

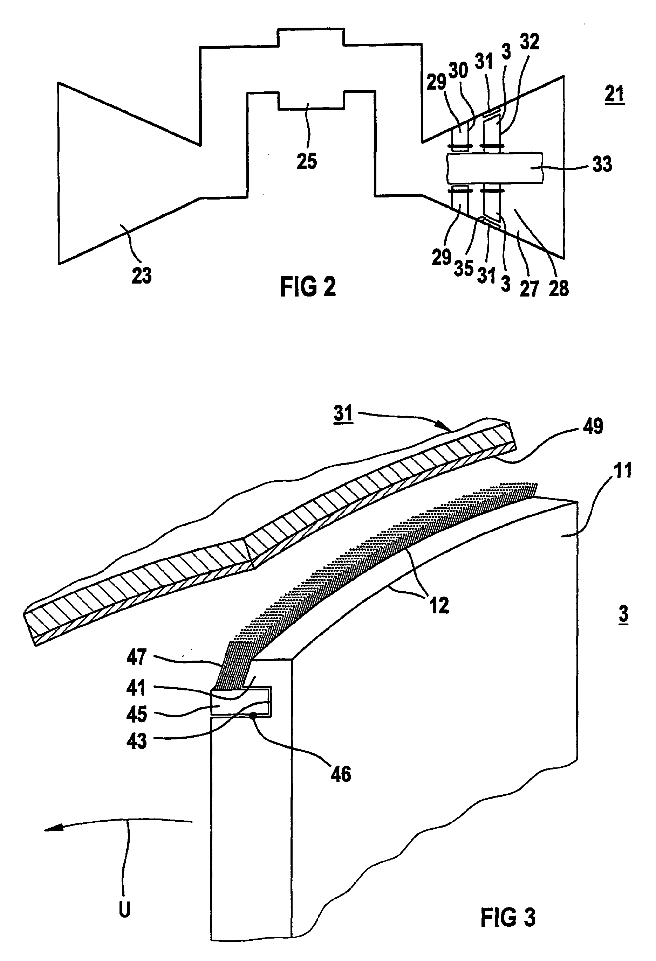

Figur 1 zeigt eine Gasturbinenlaufschaufel 3 nach dem Stand der Technik. Die Gasturbinenlaufschaufel 3 ist entlang einer Schaufelachse 5 gerichtet. Entlang der Schaufelachse 5 erstrecken sich aufeinander folgend ein Fußbereich 7, ein Schaufelblattbereich 9 und eine Schaufelspitze 11. Die Schaufelspitze 11 endet an einer umlaufenden Schaufelspitzenkante 12. Auf der Schaufelspitze 11 ist saugseitig entlang der Schaufelspitzenkante 12 eine Anstreifkante 13 angeordnet. Zwischen dem Fußbereich 7 und dem Schaufelblatt 9 ist eine sich quer zur Schaufelachse 5 erstreckende Plattform 14 angeordnet. Die Funktion der Gasturbinenlaufschaufel 3 wird anhand von Figur 2 erläutert.

Figur 2 zeigt schematisch eine Gasturbine 21. Die Gasturbine 21 ist aus einem Verdichter 23, einer Brennkammer 25 und einem Turbinenteil 27 aufgebaut. Im Turbinenteil 27 sind in einem Strömungskanal 28 aufeinanderfolgend Schaufelkränze mit jeweils Gasturbinenleitschaufeln 29 und Gasturbinenlaufschaufeln 3 angeordnet. Es sind beispielhaft nur ein Gasturbinenleitschaufelkranz 30 und ein Gasturbinenlaufschaufelkranz 32 gezeigt. Die Gasturbinenlaufschaufeln 3 sind mit ihrem jeweiligen Fußbereich 7 mit einem Rotor 33 verbunden. Die jeweiligen Plattformen 14 begrenzen den Strömungskanal 28 gegenüber dem Rotor 33. Der Schaufelkranz 32 ist radial auswärts von einem ebenfalls den Strömungskanal 28 begrenzenden Führungsring 31 umgeben. Jeder Schaufelspitze 11 der Gasturbinenlaufschaufeln 3 dieses Schaufelkranzes 32 liegt somit der Führungsring 31 gegenüber. Zwischen dem Schaufelkranz 32 und dem Führungsring 31 verbleibt in herkömmlicher Bauweise ein Spalt 35.

Im Betrieb der Gasturbine 21 wird vom Verdichter 23 Außenluft angesaugt und verdichtet. Diese verdichtete Luft wird der Brennkammer 25 zugeleitet, wo sie zusammen mit Brennstoff verbrannt wird. Die heißen Verbrennungsgase werden dem Turbinenteil 27 zugeleitet, wo wie als Arbeitsmedium mittels der Gasturbinenlaufschaufeln 3 den Rotor 33 in Rotation versetzen. Die Rotationsenergie wird beispielsweise bei einer stationären Gasturbine eines Kraftwerks zur Erzeugung elektrischer Energie genutzt. Damit die heißen Abgase aus der Brennkammer 25 möglichst vollständig zur Erzeugung der Rotationsenergie des Rotors 33 beitragen, muss eine Strömung durch den Spalt 35 sehr gering gehalten werden. Das durch den Spalt 35 strömende Arbeitsmedium nimmt nicht an der Erzeugung von Rotationsenergie teil. Dies reduziert den Wirkungsgrad der Gasturbine 21. Das Spaltmaß des Spalts 35 gering zu halten, ist eine sehr schwierige Aufgabe, da die Spaltmaße im Zehntelmillimeterbereich liegen, während der Durchmesser im Turbinenteil 27 gerade bei einer stationären, großen Gasturbine im Meterbereich liegt. Insbesondere eine sich beim Aufheizen der Gasturbine 21 ergebende Längenausdehnung im Rotor 33 führt zu einer axialen Verschiebung des Schaufelkranzes 32. Durch die konische Ausführung des Strömungskanals 28 ergibt sich eine Vergrößerung des Spalts 35. Bei der Auslegung des Spalts 35 sind somit gerade durch temperaturbedingte Verschiebungen Mindestabstände vorzusehen, so dass es bei keinem Betriebszustand der Gasturbine 21 zu einem Anstreifen der Gasturbinenlaufschaufel 3 an dem Führungsring 31 kommt. Ein solches Anstreifen kann zu einer erheblichen Schädigung insbesondere der Gasturbinenlaufschaufel 3 führen. Um die Beschädigungen bei einem doch auftretenden Anstreifen gering zu halten, wurde in herkömmlicher Technik häufig eine Anstreifkante 13, wie in Figur 1 beschrieben, an der Schaufelspitze 11 angeordnet. Diese dünne Anstreifkante 18 konnte somit bei einem Anstreifen beim Führungsring 31 so verbogen werden, dass es nicht zu einer ernsthaften Schädigung der Gasturbinenlaufschaufel 3 kommt. Trotzdem konnte bei einer solche Konstruktion nicht darauf verzichtet werden, ein gewisses Spaltmaß für den Spalt 35 beizubehalten. Dies führte, wie oben erläutert, zu einer Wirkungsgrad-Einbuße für die Gasturbine 21. Demgegenüber bietet die Erfindung einen neuen Ansatz zur Abdichtung des Spalts 35, ohne zu einem Beschädigungsrisiko für die Gasturbinenlaufschaufel 3 zu führen. Dies wird näher anhand der Figuren 3 bis 6 erläutert.

Figur 3 zeigt eine zu Figur 1 ganz ähnlich aufgebaute Gasturbinenlaufschaufel 3 bis auf eine anders gestaltete Schaufelspitze 11. Die Schaufelspitze 11 ist mit einer quer zur Schaufelachse 5 verlaufenden Verhakung 41 versehen. Diese Verhakung 41 weist eine rechteckige Nut 43 auf. In diese Nut 43 ist ein Borstenträger 45 eingeschoben. Der Borstenträger 45 ist an einer Schweissstelle 46 mit der Schaufelspitze 11 verbunden. Diese Verbindungsstelle dient in erster Linie der Sicherung gegen ein Herausfallen des Bürstenträgers 45 aus der Nut 43. Die Nut 43 und der Bürstenträger 45 sind so bemessen, dass der Bürstenträger 45 mit seiner Unterseite vollständig auf einer der Nutwände der Nut 43 aufsitzt, während die Oberseite nur halb in die Nut 43 eingreift. Die Verhakung 41 überdeckt also den Bürstenträger 45 etwa zur Hälfte. Auf der unbedeckten Oberfläche des Bürstenträgers 45 sind Borsten 47 angeordnet, die sich etwa entlang der Schaufelachse 5 erstrecken und entlang der Schaufelspitzenkante 12 auf deren saugseitger Erstreckung verlaufen. Die Borsten 47 sind so lang, dass sie über die Schaufelspitze 11 hinausragen. Der Gasturbinenlaufschaufel 3 gegenüberliegend ist bei einem Einbau in eine Gasturbine der Führungsring 31 angeordnet, wie in Figur 2 beschrieben. Die Gasturbinenlaufschaufel 3 dreht sich entlang einer Umlaufrichtung U.

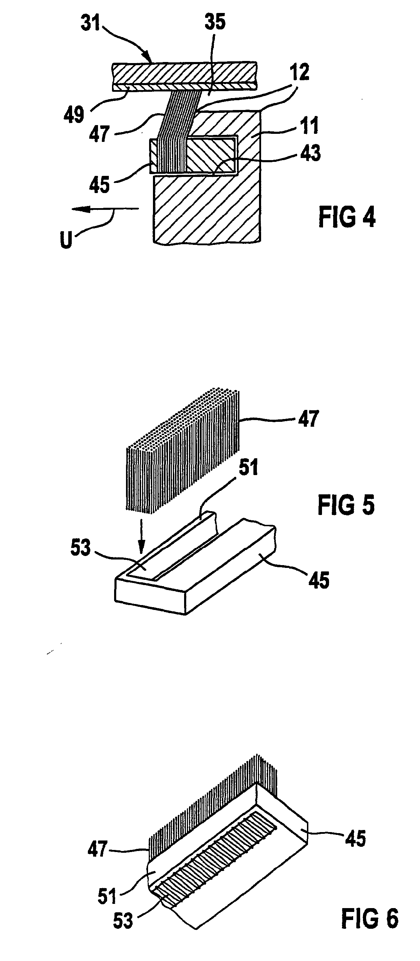

In Figur 4, die einen Längsschnitt durch die Anordnung der Figur 3 zeigt, wird erkennbar, dass bei dem Umlaufen der Gasturbinenlaufschaufel 3 die Borsten 47 am Führungsring 31 schleifen. Die Borsten 47 sind dabei etwas gegen die Umlaufrichtung U geneigt, so dass ein Verkanten der Borsten 47 gegenüber dem Führungsring 31 vermieden wird. Durch die streifende Führung der Borsten 47 wird der Spalt 35 praktisch vollständig abgedichtet. Dies führt zu einer erheblichen Wirkungsgradverbesserung. Andererseits kann das Spaltmaß für den Spalt 35 zwischen der Schaufelspitzenkante 12 und dem Führungsring 31 so bemessen werden, dass die Gasturbinenlaufschaufel 3 mit ihrem an der Schaufelspitzenkante 12 endenden Profil keinesfalls am Führungsring 31 anstreift, was zu einer Beschädigung der Gasturbinenlaufschaufel 3 führen könnte. Es wird also eine hohe Dichtwirkung mit einer hohen Betriebssicherheit kombiniert. Selbst für eine auf der Innenseite des Führungsrings 31 angeordnete Korrosionsschutzschicht 49 besteht keine Gefahr einer Beschädigung, da die Elastizität der Borsten 47 ein beschädigungsfreies Schleifen auf der Korrosionsschutzschicht 49 gestatten.

In Figur 5 und Figur 6 ist schematisch dargestellt, wie Borsten 47 mit dem Borstenträger 45 verbunden werden. Der Borstenträger 45 weist einen Metallrahmen 51 auf, der einen Schlitz 53 definiert. In diesen Schlitz 53 werden die Borsten 47 eingelassen. Die Borsten 47 sind Metallborsten. An der Unterseite des Bürstenträgers 45 werden die bündig mit der Unterseite abschließenden Borsten 47 mit dem Metallrahmen 51 und untereinander verschweißt. Der so in einfacher Weise gefertigte Borstenträger 45 wird wie in Figur 3 gezeigt, in die Nut 43 der Verhakung 41 eingeschoben. Die Verhakung 41 ist so ausgebildet, dass sie den größten Teil der Kräfte aufnimmt, die bei einem Anstreifen der Borsten 47 am Führungsring 31 entstehen. Die Schweissstelle 46 dient überwiegend nur einem Schutz gegen ein Herausfallen. Durch diesen einfachen Aufbau ist es insbesondere auch möglich, bei einer Abnutzung der Borsten 47 diese durch einen kompletten Austausch mit dem Borstenträger 45 auszutauschen.

## Patentansprüche

1. Gasturbinenlaufschaufel (3) mit entlang einer Schaufelachse (5) aufeinander folgend
einem Schaufelfuss (7),
einem Schaufelblatt (9),
einer Schaufelspitze (11) mit einer quer zur Schaufelachse (5) verlaufenden Spitzenkante (12)
**dadurch gekennzeichnet, daß**
auf der Schaufelspitze (11) entlang der Spitzenkante (12) Borsten (47) angeordnet sind.

2. Gasturbinenlaufschaufel (3) nach Anspruch 1,
bei der die Borsten (47) auf einem Träger (45) angeordnet sind, der in eine an der Schaufelspitze (11) vorgesehene Verhakung (41) eingeschoben ist.

3. Gasturbinenlaufschaufel (3) nach Anspruch 2,
bei der der Träger (45) durch ein Anschweissen an die Schaufelspitze (11) gesichert ist.

4. Gasturbinenlaufschaufel (3) nach Anspruch 2 oder 3,
bei der die Verhakung (41) so ausgelegt ist, dass sie den grössten Teil der durch ein Anstreifen der Borsten (47) an einem Führungsring (31) bei einer Rotation der Gasturbinenlaufschaufel (3) in einer Gasturbine (21) entstehenden Kräfte aufnimmt.

5. Gasturbinenlaufschaufel (3) nach einem der vorhergehenden Ansprüche,
mit einer Umlaufrichtung (U), die durch die Bewegungsrichtung bei einer Rotation der Gasturbinenlaufschaufel (3) in einer Gasturbine (21) definiert ist, wobei die Borsten (47) entgegen der Umlaufrichtung (U) geneigt sind.

6. Gasturbinenlaufschaufel (3) nach einem der vorhergehenden Ansprüche, bei der die Borsten (47) aus Draht bestehen.

7. Gasturbinenlaufschaufel (3) nach einem der vorhergehenden Ansprüche, die für eine stationäre Gasturbine (21), insbesondere mit einer Leistung grösser als 10 MW, ausgelegt ist.

8. Gasturbine (21) mit einer Gasturbinenlaufschaufel (3) nach einem der vorhergehenden Ansprüche.

9. Gasturbine (21) nach Anspruch 8,
bei der Gasturbinenlaufschaufeln nach einem der Ansprüche 1 bis 7 in einem Schaufelkranz (32) angeordnet sind, wobei dem Schaufelkranz (32) radial auswärts ein Führungsring (31) gegenüber liegt, der mit einer Korrosionsschutzschicht (49) versehen ist, an welchem Führungsring die Borsten (47) anliegen.
